# EUROPEAN PATENT APPLICATION

(11) **EP 3 492 271 A1**
(43) Date of publication of application: **05.06.2019**
(21) Application number: 17834574.0
(22) Date of filing: 28.07.2017
(51) Int. Cl.: B41M 5/52, B32B 5/18, B32B 27/32, B32B 27/36, B41J 2/01, B65D 65/40

(54) **INK-JET RECORDING MEDIUM AND PACKAGING MATERIAL**

(30) Priority: 29.07.2016 JP 2016150672
(71) Applicant: FUJIFILM Corporation, Tokyo 106-8620 (JP)
(72) Inventor: IKEDA, Kimi, Fujinomiya-shi Shizuoka 418-8666 (JP); KAIMOTO, Hideki, Fujinomiya-shi Shizuoka 418-8666 (JP)
(74) Representative: Hoffmann Eitle
(86) International application number: PCT/JP2017/027575
(87) International publication number: WO 2018/021572

(57) **Abstract**

Provided is an ink jet recording medium including a transparent support having a thickness of 10 µm to 60 µm and a transparent porous layer which is provided on at least one surface of the transparent support, contains inorganic particles, and has a thickness of 1 µm to 15 µm, in which a tear strength measured based on JIS K 7128-1 (2013) is equal to or lower than 0.5 N. Also provided is a packaging material.

## Description

### BACKGROUND OF THE INVENTION

### 1. Field of the Invention

The present disclosure relates to an ink jet recording medium and a packaging material.

### 2. Description of the Related Art

In recent years, as image recording methods for recording images, various methods have been suggested. All of those methods are required to create records having high quality such as image quality, texture, and curling after recording.

Various recording methods such as an ink jet recording method, a thermal recording method, a pressure-sensitive recording method, a photosensitive recording method, and a transfer-type recording method such as sublimation transfer as the image recording methods and recording devices suitable for the recording methods have been developed and put to practical use.

Among these recording methods, the ink jet recording method is being widely used because this method has advantages such as being capable of performing recording on various materials for recording, using a compact recording device, and being excellently quiet.

Particularly, in the field of packaging material, the ink jet recording method is drawing attention because this method can be applied to packaging materials for various articles by using a single device, does not leave the printed information on a ribbon just like the sublimation transfer recording method and the thermal recording method, and makes it possible to perform recording even after contents are packaged.

For performing high-speed ink jet recording, it is important for the jetted ink to be rapidly fixed on a recording medium such that a sharp image without bleeding is obtained. Therefore, on various supports, an ink receiving layer receiving ink is provided.

As an ink jet recording medium which can prevent the occurrence of curling and cracking and can maintain image quality and absorptivity, an ink jet recording medium is suggested which comprises a non-water absorbing support and an ink receiving layer that is provided on at least one surface of the non-water absorbing support and contains inorganic particles, in which a volume of ink absorbed into the ink receiving layer is 2 mL/m² to 8 mL/m² (for example, see JP2009-107254A).

Furthermore, as an ink jet recording material having excellent light-transmitting properties, ink absorptivity, and curling resistance and exhibiting excellent set-off resistance and blocking resistance after printing, an ink jet recording medium is suggested which has an ink receiving layer containing inorganic particles having an average secondary particle diameter equal to or smaller than 500 nm as a main component and a back coat layer containing colloidal silica having an average primary particle diameter equal to or smaller than 50 nm and a binder (for example, see JP2008-246764A).

### SUMMARY OF THE INVENTION

The ink jet recording media described in JP2009-107254A and JP2008-246764A are suitable for general recording because they have excellent ink absorptivity and curling resistance. However, these media have problems that need to be solved for them to be used for packaging.

Examples of physical properties that are additionally required for packaging materials include compatibility between hardness enough to protect contents and flexibility for the packaging materials to conform to the shape of contents, heat-sealing properties for sealing contents, visibility of contents, ease of opening the packaging materials, and the like.

Considering the physical properties required for the packaging materials described above, the recording medium described in JP2009-107254A needs to be ameliorated in terms of transparency and visibility of contents. Furthermore, for the recording medium described in JP2008-246764A, heat-sealing properties at the time of packaging and ease of opening are not considered at all.

An object of an embodiment of the present invention is to provide an ink jet recording medium making it possible to prepare a packaging material in which printing suitability and visibility of contents are compatible with each other and which can be easily opened.

An object of another embodiment of the present invention is to provide a packaging material in which the ink jet recording medium is used and printing suitability and visibility of contents are compatible with each other and which can be easily opened.

Means for achieving the objects include the following embodiments.
<1> An ink jet recording medium comprising a transparent support having a thickness of 10 µm to 60 µm and a transparent porous layer which is provided on at least one surface of the transparent support, contains inorganic particles, and has a thickness of 1 µm to 15 µm, in which a tear strength measured based on JIS K 7128-1 (2013) is equal to or lower than 0.5 N.
<2> The ink jet recording medium described in <1> in which a haze equal to or lower than 20%.
<3> The ink jet recording medium described in <1> or <2>, in which the transparent support has a polyethylene-containing layer.
<4> The ink jet recording medium described in any one of <1> to <3>, in which the transparent support is a laminate having two or more layers, and the laminate is a laminate selected from the group consisting of a laminate having a polyester-containing layer and a polyethylene-containing layer and a laminate having a polypropylene-containing layer and a polyethylene-containing layer.
<5> The ink jet recording medium described in any one of <1> to <4>, in which the inorganic particles are one or more inorganic particles selected from the group consisting of silica particles, alumina particles, and pseudo-boehmite.
<6> The ink jet recording medium described in any one of <1> to <5>, in which the inorganic particles contain silica particles having an average secondary particle diameter equal to or smaller than 100 nm.
<7> The ink jet recording medium described in any one of <1> to <6>, in which a content of the inorganic particles contained in the transparent porous layer with respect to a total solid content in the transparent porous layer is 50% by mass to 90% by mass.
<8> The ink jet recording medium described in any one of <1> to <7>, in which the transparent porous layer contains a water-soluble polymer.
<9> The ink jet recording medium described in any one of <1> to <8>, in which a thickness of the transparent porous layer is 2 µm to 10 µm.
<10> The ink jet recording medium described in any one of <1> to <9>, in which the tear strength measured based on JIS K 7128-1 (2013) is equal to or higher than 0.01 N and equal to or lower than 0.2 N.
<11> A packaging material comprising the ink jet recording medium described in any one of <1> to <10>.

According to an embodiment of the present invention, it is possible to provide an ink jet recording medium making it possible to prepare a packaging material in which printing suitability and visibility of contents are compatible with each other and which can be easily opened.

According to another embodiment of the present invention, it is possible to provide a packaging material in which the ink jet recording medium is used and printing suitability and visibility of contents are compatible with each other and which can be easily opened.

### BRIEF DESCRIPTION OF THE DRAWINGS

Fig. 1 is a schematic cross-sectional view showing an example of the constitution of an ink jet recording medium of the present embodiment.
Fig. 2 is a view showing an aspect in which the ink jet recording medium is folded once and two sides thereof in a direction perpendicular to the folded portion are heat-sealed except for a tablet insertion side.
Fig. 3 is a view showing a packaging material obtained after the tablet insertion side in Fig. 2 is heat-sealed.
Fig. 4 is a cross-sectional view taken along the line A-A in Fig. 3.
Fig. 5 is a view showing an aspect in which one sheet of ink jet recording medium and one sheet of transparent support are stacked and three sides thereof are heat-sealed except for a tablet insertion side.
Fig. 6 is a view showing a packaging material obtained after the tablet insertion side in Fig. 5 is heat-sealed.
Fig. 7 is a cross-sectional view taking along the line B-B in Fig. 6.
Fig. 8 is a view showing an aspect in which one sheet of ink jet recording medium and one sheet of white support are stacked and three sides thereof are heat-sealed except for a tablet insertion side.
Fig. 9 is a view showing a packaging material obtained after the tablet insertion side in Fig. 8 is heat-sealed.
Fig. 10 is a cross-sectional view taken along the line C-C in Fig. 9.
Fig. 11 is a view showing an aspect in which one sheet of ink jet recording medium and one sheet of black support are stacked and three sides thereof are heat-sealed except for a tablet insertion side.
Fig. 12 is a view showing a packaging material obtained after the tablet insertion side in Fig. 11 is heat-sealed.
Fig. 13 is a cross-sectional view taken along the line D-D in Fig. 12.

### DESCRIPTION OF THE PREFERRED EMBODIMENTS

Hereinafter, an ink jet recording medium of the present embodiment and a packaging material of the present embodiment in which the ink jet recording medium is used will be described with reference to drawings.

In the present specification, a range of numerical values described using "to" means a range including the numerical values listed before and after "to" as a minimum value and a maximum value respectively.

In the present specification, regarding the description of the amount of each component in a composition, in a case a plurality of substances corresponding to each component are present in the composition, unless otherwise specified, the amount of each component means the total amount of the plurality of components present in the composition.

In the present specification, regarding ranges of numerical values that are gradationally described, the upper limit or the lower limit described in one range of numerical values may be substituted with the upper limit or the lower limit of another range of numerical values that is gradationally described. Furthermore, the upper limit or the lower limit of a range of numerical values described in the present specification may be substituted with the values shown in examples.

In the present specification, the term "solid contents" means the components except for a solvent. A liquid component such as a low-molecular weight component other than a solvent is also included in "solid contents" in the present specification.

In the present specification, "solvent" means water, an organic solvent, and a mixed solvent of water and an organic solvent.

### [Inkjet recording medium]

The ink jet recording medium of the present embodiment comprises a transparent support having a thickness of 10 µm to 60 µm and a transparent porous layer which is provided on at least one surface of the transparent support, contains inorganic particles, and has a thickness of 1 µm to 15 µm, in which a tear strength measured based on JIS K 7128-1 (2013) is equal to or lower than 0.5 N.

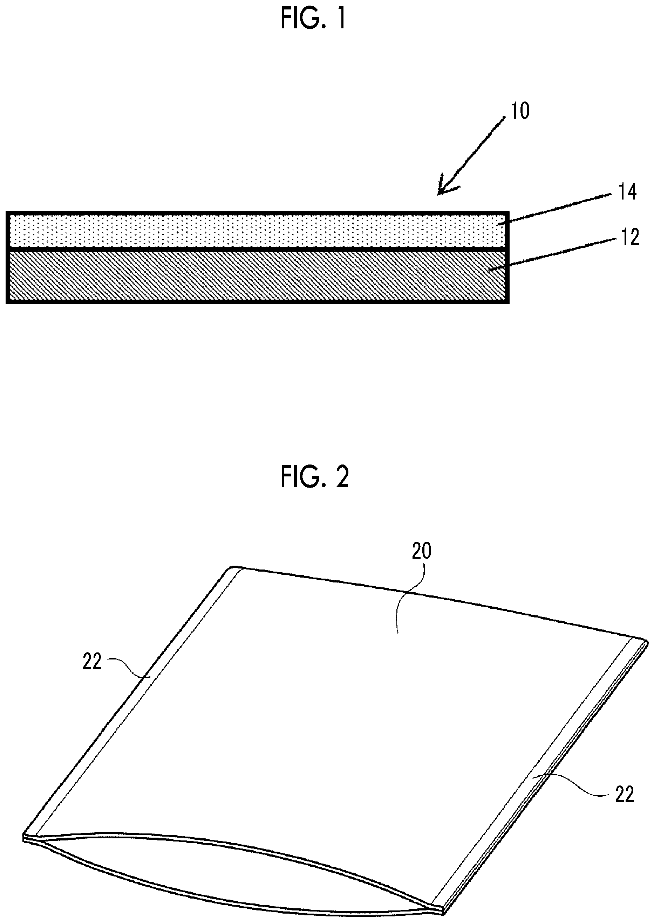

Fig. 1 is a schematic cross-sectional view showing an example of the constitution of an ink jet recording medium 10 of the present embodiment. As shown in Fig. 1, the ink jet recording medium 10 has a transparent support 12 formed of a polyethylene layer and an ink receiving layer which is a transparent porous layer 14 disposed on one surface of the transparent support 12. Fig. 1 shows an example in which the transparent porous layer 14 is formed on one surface of the transparent support 12. However, the present invention is not limited thereto, and the transparent porous layer 14 may be formed on both surfaces of the transparent support 12. In Fig. 1, the transparent support 12 is a single-layer structure formed of a polyethylene layer. However, the present invention is not limited thereto, and the transparent support 12 may be a support having a laminated structure including two or more layers.

Hereinafter, each of the layers included in the ink jet recording medium of the present embodiment will be described.

### <Transparent support>

The transparent support in the present embodiment has excellent visible light-transmitting properties. For example, in a case where the transparent support is used in packaging materials, the visibility of the contents becomes excellent.

The transparent support in the present specification means a support having a visible light transmittance equal to or higher than 80% at a wavelength of 400 nm to 700 nm. In a case where the transparent support has a laminated structure including two or more layers, the transparent support also refers to a support which is a laminate having a visible light transmittance equal to or higher than 80%. The visible light transmittance of the transparent support is preferably equal to or higher than 90%.

The light transmittance of the ink jet recording medium of the present embodiment is measured using a haze meter NDH-5000 (manufactured by NIPPON DENSHOKU INDUSTRIES Co., LTD.), for example.

From the viewpoint of obtaining excellent transparency and flexibility, it is preferable that the transparent support contains a thermoplastic resin which can form a film.

Examples of the resin which can be used for forming the transparent support include polyester such as polyethylene terephthalate (PET) or polyethylene naphthalate (PEN), polyethylene, polysulfone, polyphenylene oxide, polyimide, polycarbonate, polypropylene, polyamide, and the like.

Furthermore, cellophane which is a cellulose-processed product may also be used. The cellophane is classified into general cellophane and moisture-proof cellophane. From the viewpoint of protecting contents, moisture-proof cellophane is preferable.

It is preferable that the transparent support has a layer containing polyethylene as a main component, because then the heat-sealing properties of a packaging material including the ink jet recording medium becomes excellent.

The polyethylene contained in the polyethylene-containing layer can be selected according to the purpose. As the polyethylene, at least one kind of polyethylene selected from low-density polyethylene (LDPE) or linear low-density polyethylene (LLDPE) is preferable.

In a case where the transparent support of the present embodiment has the polyethylene-containing layer on a side on which an ink receiving layer is to be formed, in order to make the polyethylene-containing layer exhibit adhesiveness with respect to the ink receiving layer, an undercoat layer can also be provided. It is preferable that the undercoat layer contains aqueous polyester, gelatin, or polyvinyl alcohol (PVA). In a case where the undercoat layer is provided, the thickness of the undercoat layer is preferably within a range of 0.01 µm to 5 µm.

The transparent support preferably has a polyester-containing layer, a polypropylene-containing layer, a moisture-proof cellophane layer, and the like, and more preferably has a polyethylene terephthalate-containing layer and a polypropylene-containing layer, because then the oxygen blocking properties of a packaging material including the ink jet recording medium of the present embodiment can be further improved.

The transparent support may contain only one kind of resin or two or more kinds of resins. In a case where the transparent support contains two or more kinds of resins, the transparent support may contain two or more kinds of resins as a mixture or may contain two or more kinds of resin films as a laminated structure.

The transparent support in the present embodiment may be a laminate including two or more layers of resin films as described above.

In a case where the transparent support has a laminated structure of two or more layers of resin films, resins contained in the respective layers may be the same as or different from each other. Furthermore, the two or more layers of resin films may have different functions respectively.

For example, the transparent support is a laminate having two or more layers, and the laminate is preferably a laminate selected from the group consisting of a laminate having a polyester-containing layer and a polyethylene-containing layer and a laminate having a polypropylene-containing layer and a polyethylene-containing layer.

According to the above aspect, the transparent support has a layer excellent in sealing properties which are preferably heat-sealing properties and a layer excellent in oxygen blocking properties.

The thickness of the transparent support is within a range of 10 µm to 60 µm. In this range of thickness, it is possible to obtain hardness necessary for protecting contents in a case where the ink jet recording medium is used in a packaging material, flexibility, and a suitable tear strength which will be described later.

The thickness of the transparent support is preferably within a range of 20 µm to 50 µm, and more preferably within a range of 30 µm to 45 µm.

In a case where the transparent support is a laminate having two or more layers, the thickness of the transparent support refers to the thickness of the laminate, that is, the total thickness of the two or more layers.

The thickness of the transparent support can be measured by known methods.

Examples of the methods of measuring the thickness of the transparent support include a method of measuring the thickness by using a micrometer, a method of scanning a sample by using a transmission electron microscope (TEM), a method of observing a cross section of a sample by using a scanning electron microscope (SEM), and the like.

The transparent support in the present embodiment has a transparent porous layer, which will be described later, on at least one surface thereof. For the purpose of further improving the adhesiveness between the transparent support and the transparent porous layer, a surface treatment can be performed on the transparent support. Examples of the surface treatment include a corona discharge treatment, a glow discharge treatment, a flame treatment, an ultraviolet irradiation treatment, and the like. In a case where the surface treatment is performed, it is preferable to select conditions such that the transparency of the support is not impaired.

### <Transparent porous layer>

The ink jet recording medium of the present embodiment has a transparent porous layer. The transparent porous layer is a layer functioning as an ink receiving layer at the time of ink jet recording.

The transparent porous layer is a layer which is provided on at least one surface of the transparent support, contains inorganic particles, and has a thickness of 1 µm to 15 µm.

Because the transparent porous layer contains inorganic particles, voids appropriate for receiving ink are held in the layer.

The transparent porous layer is not particularly limited as long as it has the thickness described above and contains inorganic particles. Unless the effects of the present embodiment are impaired, the transparent porous layer may contain components other than the inorganic particles according to the purpose.

In the present specification, "transparent" of the transparent porous layer means that a visible light transmittance of the ink jet recording medium as a laminate of the transparent support and the transparent porous layer on the support is equal to or higher than 80% at a wavelength of 400 nm to 700 nm. The visible light transmittance can be measured by the method described above.

### (Inorganic particles)

Examples of the inorganic particles that the transparent porous layer in the present embodiment can contain include silica particles such as colloidal silica, titanium dioxide, barium sulfate, calcium silicate, zeolite, kaolinite, halloysite, mica, talc, calcium carbonate, magnesium carbonate, calcium sulfate, pseudo-boehmite, zinc oxide, zinc hydroxide, alumina particles, aluminum silicate, magnesium silicate, zirconium oxide, zirconium hydroxide, cerium oxide, lanthanum oxide, yttrium oxide, and the like.

From the viewpoint of excellent transparency, as the inorganic particles, silica particles such as colloidal silica, alumina particles, or pseudo-boehmite is preferable.

For example, as the inorganic particles, it is possible to preferably use silica particles having an average primary particle diameter equal to or smaller than 20 nm, colloidal silica having an average primary particle diameter equal to or smaller than 30 nm, alumina particles having an average primary particle diameter equal to or smaller than 20 nm, pseudo-boehmite having an average pore radius of 2 nm to 15 nm, and the like.

The transparent porous layer may contain only one kind of inorganic particles or two or more kinds of inorganic particles.

Silica particles which are preferable inorganic particles are roughly classified into particles manufactured by a wet method and particles manufactured by a dry method (vapor-phase method), according to the manufacturing method.

Examples of the wet method include a method of generating activated silica by the acidolysis of silicate, appropriately polymerizing the generated activated silica, and causing aggregation and precipitation so as to obtain hydrous silica.

Examples of the vapor-phase method include a flame hydrolysis method in which halogenated silicon is hydrolyzed in a vapor phase at a high temperature, and a method of obtaining anhydrous silica by an arc method in which silica sand and coke are heated, reduced, and vaporized in an electric furnace by an arc and the resultant is oxidized by air, and the like.

As the inorganic particles in the present embodiment, silica particles manufactured by a vapor-phase method are preferable.

The silica particles manufactured by a vapor-phase method are different from hydrous silica in terms of the density of silanol groups on the surface, the presence or absence of holes, and the like, and have properties different from those of hydrous silica. The silica particles manufactured by a vapor-phase method are suitable for forming a three-dimensional structure having a void volume greater than that of hydrous silica. The reason is unclear but is assumed to be as below. In the case of the silica particles manufactured by a vapor-phase method, the density of silanol groups within the particle surface is 2 to 3 silanol groups/nm², which is lower than the density of silanol groups of hydrous silica particles that is 5 to 8 silanol groups/nm². Therefore, the silica particles manufactured by a vapor-phase method form a loose flocculate, and as a result, a transparent porous layer containing the silica particles manufactured by a vapor-phase method becomes a structure having a void volume greater than that of a transparent porous layer containing hydrous silica particles.

The silica manufactured by a vapor-phase method has a particularly large specific surface area. Therefore, this silica has high ink absorptivity and high ink holding efficiency. Furthermore, this silica has a low refractive index. Therefore, by being appropriately dispersed, this silica can form a porous layer having higher transparency. The silica manufactured by a vapor-phase method is preferable because it has higher ink holding properties and transparency, and accordingly, a higher color density and excellent color developability are obtained at the time of forming images. Because the transparency of the porous layer is excellent, in a case where the porous layer is applied to a packaging material, the visibility of contents is further improved.

From the viewpoint of further improving an ink absorption speed, for example, the average primary particle diameter of the inorganic particles such as the silica manufactured by a vapor-phase method is preferably equal to or smaller than 30 nm, more preferably 3 nm to 30 nm, and even more preferably 3 nm to 20 nm. Particularly, the silica particles manufactured by a vapor-phase method easily adhere to each other due to the hydrogen bonding formed by silanol groups. Accordingly, in a case where the average primary particle diameter is equal to or smaller than 50 nm, a structure having a large void volume can be formed, and the ink absorption characteristics can be effectively improved.

In a case where the transparent porous layer in the present embodiment contains the silica particles manufactured by a vapor-phase method described above, the content of the silica particles manufactured by a vapor-phase method with respect to the total amount of the inorganic particles is preferably equal to or greater than 30% by mass, and more preferably equal to or greater than 50% by mass.

As other examples of the inorganic particles which can be used in the present embodiment, alumina particles, alumina hydrate, and a mixture or complex of these are also preferable.

Among these, alumina hydrate is preferable because ink is excellently absorbed into and fixed to this material. Particularly, pseudo-boehmite (Al₂O₃·nH₂O) is preferable.

Alumina hydrates in various forms can be used. Among these, from the viewpoint of easily obtaining a smooth layer, pseudo-boehmite in the form of sol is preferable.

Regarding the pore structure of the pseudo-boehmite, the average pore radius thereof is preferably 1 nm to 30 nm, and more preferably 2 nm to 15 nm. The pore volume of the pseudo-boehmite is preferably 0.3 ml/g to 2.0 ml/g, and more preferably 0.5 ml/g to 1.5 ml/g.

The pore radius and the pore volume of the pseudo-boehmite can be measured by a nitrogen adsorption/desorption method. The measurement can be performed by a method using a gas absorption/desorption analyzer (for example, "OMNISORP 369 (trade name)" manufactured by COULTER) or the like.

As another example of the alumina particles, alumina particles manufactured by a vapor-phase method are preferable. The alumina particles manufactured by a vapor-phase method can be preferably used because these particles have a large specific surface area. The average primary particle diameter of the alumina particles manufactured by a vapor-phase method is preferably equal to or smaller than 30 nm, and more preferably equal to or smaller than 20 nm.

The inorganic particles may be used as they are in the state of primary particles, or may be used in a state where they have formed secondary particles.

The average secondary particle diameter of the inorganic particles contained in the transparent porous layer is preferably equal to or smaller than 500 nm, more preferably equal to or smaller than 200 nm, and even more preferably equal to or smaller than 100 nm, because then voids having excellent ink receiving properties can be formed even though the thickness of the layer is within a range of 10 µm to 60 µm.

The average primary particle diameter and the average secondary particle diameter of the inorganic particles can be measured by the following method.

### <Measurement of inorganic particle diameter>

The surface of the transparent porous layer is observed using an electron microscope (JEM2100, manufactured by JEOL Ltd.), and for each of 100 silica particles in random positions within the surface, a projected area is determined. Then, on the assumption that there are circles having the same area as the projected area, the diameter of each of the particles is determined, and a simple average of the diameters of the 100 silica particles is calculated, thereby determining the average primary particle diameter.

Furthermore, the surface of the transparent porous layer is observed using an electron microscope (S-4700, manufactured by Hitachi, LTD.) at an acceleration voltage of 10 kV, and for each of 100 aggregated particles in random positions within the surface, a projected area of each of the silica particles is determined. Then, on the assumption that there are circles having the same area as the projected area, the diameters thereof are determined, and a simple average of the diameters of the 100 aggregated particles is calculated, thereby determining the average secondary particle diameter.

The transparent porous layer in the present embodiment may contain only one kind of inorganic particles or two or more kinds of inorganic particles.

The content of the inorganic particles contained in the transparent porous layer with respect to the total solid content in the transparent porous layer is preferably 50% by mass to 90% by mass, and more preferably 60% by mass to 80% by mass.

### (Binder)

The transparent porous layer in the present embodiment can contain a binder for holding the inorganic particles.

As the binder, a water-soluble polymer is preferable, and examples thereof include polyvinyl alcohol having a hydroxy group as a hydrophilic structural unit, a cellulose resin, chitin, chitosan, starch, a resin having an ether bond, a resin having a carbamoyl group, and the like.

Furthermore, as other aspects of the binder, polyacrylic acid having a carboxyl group as a dissociable group and a salt of the polyacrylic acid, a maleic acid resin, an alginic acid resin or a salt thereof, gelatin, and the like can be exemplified.

More specifically, examples of the polyvinyl alcohol include polyvinyl alcohol (PVA), acetoacetyl-modified polyvinyl alcohol, cation-modified polyvinyl alcohol, anion-modified polyvinyl alcohol, silanol-modified polyvinyl alcohol, polyvinyl acetal, and the like.

Examples of the cellulose resin include methyl cellulose (MC), ethyl cellulose (EC), hydroxyethyl cellulose (HEC), carboxymethyl cellulose (CMC), hydroxypropyl cellulose (HPC), hydroxyethyl methyl cellulose, hydroxypropyl methyl cellulose, and the like.

Examples of the resin having an ether bond include polyethylene oxide (PEO), polypropylene oxide (PPO), polyethylene glycol (PEG), polyvinyl ether (PVE), and the like.

Examples of the resin having a carbamoyl group include polyacrylamide (PAAM), polyvinylpyrrolidone (PVP), polyacrylic acid hydrazide, and the like.

Among these, a polyvinyl alcohol resin is preferable. The polyvinyl alcohol resin may be a partially saponified resin.

Examples of PVA include PVA described in JP1992-052786B (JP-H04-052786B), JP1993-067432B (JP-H05-067432B), JP1995-029479B (JP-H07-029479B), JP2537827B, JP1995-057553B (JP-H07-057553B), JP2502998B, JP3053231B, JP1988-176173A (JP-S63-176173A), JP2604367B, JP1995-276787A (JP-H07-276787A), JP1997-207425A (JP-H09-207425A), JP1999-058941A (JP-H11-058941A), JP2000-135858A, JP2001-205924A, JP2001-287444A, JP1987-278080A (JP-S62-278080A), JP1997-039373A (JP-H09-039373A), JP2750433B, JP2000-158801A, JP2001-213045A, JP2001-328345A, JP1996-324105A (JP-H08-324105A), JP1999-348417A (JP-H11-348417A), and the like.

Furthermore, examples of binders other than the polyvinyl alcohol resin include the compounds described in paragraphs "0011" to "0014" in JP1999-165461A (JP-H11-165461A) and the like.

In a case where the transparent porous layer contains a binder, the transparent porous layer may contain only one kind of binder or two or more kinds of binders.

In a case where the transparent porous layer contains a binder, the content of the binder with respect to the total solid content in the transparent porous layer is preferably 3% by mass to 40% by mass, and more preferably 5% by mass to 20% by mass.

Each of the inorganic particles and the binder contained in the transparent porous layer may be a single material or a mixture of a plurality of materials.

It is preferable that the transparent porous layer contains silica particles as inorganic particles, because then the transparency is further improved. Furthermore, it is preferable that the transparent porous layer contains a polyvinyl alcohol resin as a binder, because then a firm porous layer can be formed. As the polyvinyl alcohol resin, a polyvinyl alcohol resin having a saponification degree of 70% to 100% is more preferable, and a polyvinyl alcohol resin having a saponification degree of 80% to 99.5% is even more preferable.

It is considered that the above combination is preferable for the following reason. The hydroxyl group in the polyvinyl alcohol resin and the silanol group on the surface of the silica particles form a hydrogen bond, and accordingly, a three-dimensional network structure containing secondary particles of the silica particles is easily formed. As a result, a hard porous layer having a large void volume is formed.

In a case where another binder is additionally used in combination with the polyvinyl alcohol resin as a binder, the content of the polyvinyl alcohol resin in all the binders is preferably equal to or greater than 50% by mass, and more preferably equal to or greater than 70% by mass.

Provided that the content of the inorganic particles is x, and the content of the binder is y, as a mass content ratio of the inorganic particles to the binder [hereinafter, also referred to as PB ratio (x/y) as well] increases, the void volume, the pore volume, and the surface area (per unit mass) further increase, but the density, the film hardness, and the like tend to decrease.

Considering these, the PB ratio (x/y) of the transparent porous layer in the present embodiment is preferably within a range of 1.5 to 15. In a case where the PB ratio (x/y) is within this range, a reduction in film hardness and cracking at the time of drying are inhibited, a sufficient void volume is maintained, and hence excellent ink absorptivity is obtained.

In a case where the ink jet recording medium passes through a transport system of an ink jet printer, sometimes a stress is applied to the ink jet recording medium. Furthermore, for example, in a case where the ink jet recording medium is used as a packaging material, the ink jet recording medium is subjected to cutting processing. From the viewpoint of more effectively preventing the cracking, peeling, and the like of the transparent porous layer at the time of printing and processing, it is important for the transparent porous layer to have sufficient film hardness. From the viewpoint of further improving the film hardness, the PB ratio (x/y) is more preferably equal to or lower than 10. From the viewpoint of further improving the ink absorptivity and the ink holding properties, the PB ratio (x/y) is more preferably equal to or higher than 2.

For example, in a case where a non-hygroscopic support is coated with a coating solution, which is obtained by thoroughly dispersing a silica particles manufactured by a vapor-phase method having an average primary particle diameter equal to or smaller than 20 nm and a hydrophilic binder at a mass ratio (x/y) of 2 to 10 in an aqueous solution, and the coating layer is dried, a three-dimensional network structure having secondary particles of the silica particles as network chains is formed, and a light-transmitting porous film can be easily formed which has an average pore diameter equal to or smaller than 30 nm, a void volume of 50% to 80%, a specific pore volume equal to or greater than 0.5 ml/g, and a specific surface area equal to or greater than 100 m²/g.

Furthermore, in a case where silica manufactured by a vapor-phase method having an average primary particle diameter equal to or smaller than 30 nm is used as inorganic particles, the content of the hydrophilic binder with respect to the silica manufactured by a vapor-phase method is preferably equal to or smaller than 50% by mass, that is, the PB ratio (x/y) is preferably equal to or higher than 2.

### (Other components transparent porous layer can contain)

As long as the effects of the present invention are not impaired, the transparent porous layer may further contain other known components used in the field of ink jet recording medium, in addition to the inorganic particles and the binder which is a preferable component used in combination. Those other components can be appropriately selected according to the purpose such as improving the film hardness, accelerating the fixing of ink, and the like.

Examples of those other components include a crosslinking agent which can form a crosslinked structure in a hydrophilic polymer as a binder, a cationic polymer, a water-soluble polyvalent metal compound, a mordant, a surfactant, and the like.

Examples of the crosslinking agent include boric acid, glyoxal, and the like.

The cationic polymer is useful as a dispersant of the inorganic particles. As the cationic polymer, commercial products may be used, and examples of the commercial products include SHAROL (registered trademark) DC-902P manufactured by DKS Co., Ltd., and the like.

### The thickness of the transparent porous layer is within a range of 1 µm to 15 µm, preferably within a range of 2 µm to 10 µm, and more preferably within a range of 4 µm to 9 µm. The transparent porous layer can have a thickness of 4.5 µm, 8.2 µm, or 13 µm for example, but the thickness is not limited to these examples.

In a case where the thickness of the transparent porous layer is within the above range, powder falling at the time of manufacturing a packaging material is inhibited, and the visibility of contents becomes excellent.

The thickness of the transparent porous layer can be measured by known methods.

Examples of the method of measuring the thickness of the transparent porous layer include a method of scanning a sample by using a transmission electron microscope (TEM), a method of observing a cross section of a sample by using a scanning electron microscope (SEM), and the like.

### <Other layers>

As long as the effects of the present embodiment are not impaired, the ink jet recording medium of the present embodiment may be provided with other layers in addition to the transparent support and the transparent porous layer. Those other layers are not particularly limited and can be appropriately selected according to the purpose. Examples of those other layers include an easily adhesive layer, an interlayer, and the like.

### <Manufacturing of ink jet recording medium>

The ink jet recording medium of the present embodiment can be manufactured by common methods.

Examples of the methods include a method including a step of preparing a transparent support, a step of preparing a composition for forming a transparent porous layer that is used for forming a transparent porous layer, and a step of applying the obtained composition for forming a transparent porous layer to at least one surface of the transparent support and curing the composition for forming a transparent porous layer so as to form a transparent porous layer, and the like.

Furthermore, in a case where other layers are provided, if necessary, another step such as performing a surface treatment on the transparent support can be performed.

The composition for forming a transparent porous layer can be prepared by homogeneously mixing inorganic particles with a binder, a crosslinking agent, a cationic polymer, a water-soluble polyvalent metal compound, a mordant, a surfactant, and the like which are used in combination as desired.

A solvent used for preparing the composition for forming a transparent porous layer is not particularly limited. It is preferable to use a solvent which is appropriately selected from water, a water-soluble organic solvent such as ethanol, and the like.

In a case where water is used as a solvent, it is preferable to use deionized water, pure water, or the like having a small amount of impurities.

At the time of coating the transparent support with the prepared composition for forming a transparent porous layer, known coating methods can be used. The transparent porous layer in the present embodiment has a thickness within a range of 1 µm to 15 µm, and is thinner than generally used ink jet recording media. Therefore, it is preferable to use a coater such as a gravure coater, a bar coater, or a die coater for performing coating, because then the transparent support can be more uniformly coated.

The curing after the coating is preferably performed at a temperature of 40°C to 120°C, and more preferably performed at a temperature of 50°C to 100°C, by using a hot-air drying machine.

From the viewpoint of the uniformity of the formed transparent porous layer, the wind speed in the hot-air drying machine is preferably within a range of 1 m/sec to 10 m/sec, and more preferably within a range of 3 m/sec to 8 m/sec. The drying time is preferably 3 minutes to 8 minutes, and more preferably 4 minutes to 6 minutes.

In a case where a laminate is used as the transparent support, from the viewpoint of manufacturing properties of a packaging material, the composition for forming a transparent porous layer is preferably applied to a surface having excellent heat-sealing properties, for example, a surface having a layer opposite to a polyethylene layer.

After the coating with the composition for forming a transparent porous layer, a step of supplying a treatment liquid can be additionally performed. Examples of the treatment liquid include a treatment liquid containing an acidic substance, a treatment liquid containing a crosslinking agent accelerating the crosslinking or the curing of the transparent porous layer, and the like.

Hereinafter, the treatment liquid containing an acidic substance that is useful for the fixing of ink will be described.

As the acidic substance which can be used in the treatment liquid, it is possible to use phosphoric acid, phosphonic acid, phosphinic acid, sulfuric acid, sulfonic acid, sulfinic acid, carboxylic acid, and salts of these or to use compounds containing acid groups of these. As the acidic substance, a compound having a phosphoric acid group or a carboxylic acid group is preferable, and a compound having a carboxylic acid group is more preferable.

Examples of the carboxylic acid include a compound having a furan, pyrrole, pyrroline, pyrrolidone, pyrone, pyrrole, thiophene, indole, pyridine, or quinoline structure and has a carboxyl group as a functional group, and the like. More specifically, examples of the carboxylic acid include pyrrolidone carboxylic acid, pyrone carboxylic acid, pyrrole carboxylic acid, furan carboxylic acid, pyridine carboxylic acid, coumaric acid, thiophene carboxylic acid, nicotinic acid, derivatives or salts of these compounds, and the like.

As the acidic substance, a compound selected from the group consisting of pyrrolidone carboxylic acid, pyrone carboxylic acid, furan carboxylic acid, coumaric acid, and derivatives or salts of these compounds is preferable.

The treatment liquid may contain only one kind of acidic substance or two or more kinds of acidic substances.

As long as the effects of the present embodiment are not impaired, the treatment liquid may contain other additives. Examples of those other additives include an anti-drying agent (wetting agent), an antifading agent, an emulsion stabilizer, a penetration enhancer, an ultraviolet absorber, a preservative, a fungicide, a pH adjuster, a surface tension adjuster, an antifoaming agent, a viscosity adjuster, a dispersant, a dispersion stabilizer, a rust inhibitor, a chelating agent, and the like.

### <Preferable physical properties of ink jet recording medium>

The ink jet recording medium of the present embodiment is suitably used as a packaging material. Considering the use, it is preferable that the ink jet recording medium of the present embodiment has physical properties described below.

### 1. Tear strength

The tear strength, which is measured based on JIS K 7128-1 (2013), of the ink jet recording medium of the present embodiment is equal to or lower than 0.5 N, and preferably equal to or lower than 0.2 N. Provided that the tear strength is within the above range, in a case where a 5 mm cut is made in the ink jet recording medium, it is easy to tear the ink jet recording medium simply by hand, and the packaging material can be easily opened as necessary.

The tear strength can be set to be equal to or higher than 0.01 N, because then contents can be stably held.

Examples of means for obtaining a tear strength within the above range include means for controlling the type of the resin constituting the transparent support, the thickness of the support, the stretching condition at the time of forming a resin into a film, and the like.

### 2. Haze

The haze of the ink jet recording medium of the present embodiment is preferably equal to or lower than 25%, and more preferably equal to or lower than 20%.

In a case where the haze of the ink jet recording medium is within the above range, the transparency of the ink jet recording medium becomes excellent, and the visibility of contents becomes excellent.

The haze can be measured using a haze meter NDH-5000 (manufactured by NIPPON DENSHOKU INDUSTRIES Co., LTD.), for example. The haze is measured in a state where the support surface of the ink jet recording medium, that is, a surface which does not have the transparent porous layer is caused to face a light source.

### 3. Heat-sealing properties

In order to apply the ink jet recording medium of the present embodiment to a packaging material, sealing properties are important. Particularly, it is preferable that the ink jet recording medium has excellent heat-sealing properties.

Regarding the heat-sealing properties, in a case where support surfaces (surfaces which do not have a transparent porous layer) of two sheets of ink jet recording media are brought into contact with each other and caused to firmly adhere to each other by being heated for 5 seconds by using a heat-sealer HS-400 manufactured by TAIYO ELECTRIC IND. CO., LTD., it is preferable that the media are heat-sealed at a temperature of equal to or lower than 200°C. The temperature enabling heat-sealing is preferably equal to or lower than 160°C. In a case where the ink jet recording media can be heat-sealed at a temperature equal to or lower than 120°C, the ink jet recording medium can be evaluated as having excellent heat-sealing properties. "Enabling heat-sealing" means that the contents sealed into the two sheets of ink jet recording media do not leak after heat-sealing.

### 4. Gas barrier properties

In a case where the ink jet recording medium is used as a packaging material, from the viewpoint of stably protecting contents, particularly, contents such as foods or pharmaceutical products, it is preferable that the ink jet recording medium has excellent gas barrier properties.

Examples of indices of gas barrier properties include an oxygen transmission rate.

The oxygen transmission rate can be measured by the following method. As a sample, the ink jet recording medium is set between sealed cells, and a vacuum is created in both cells. Oxygen at a certain pressure (for example, 100 kPa) is sealed into one cell, and the amount of oxygen transmitted through the sample film is read as a pressure level by using a pressure sensor set in the other cell and converted into an oxygen amount.

The oxygen transmission coefficient is preferably equal to or lower than 2,000 cm³/(m²·day·atm), more preferably equal to or lower than 100 cm³/(m²·day·atm), and most preferably equal to or lower than 50 cm³/(m²·day·atm).

### <Formation of image>

In a case where an image is formed on the ink jet recording medium of the present embodiment, a step of forming an image by jetting ink to the transparent porous layer from an ink jet recording device and a step of removing the solvent of the ink applied to the transparent porous layer may be performed. If necessary, other steps can be additionally performed.

The application of ink to the transparent porous layer can be performed by jetting ink according to preset image data.

After the application of ink, from the transparent porous layer to which the ink is applied, the solvent contained in the ink is removed by drying. The solvent can be dried and removed by common methods. The solvent contained in the ink does not need to be completely removed. As long as the image is stable, a small of the solvent may remain.

In a case where the treatment liquid containing an acidic substance useful for the fixing of ink is applied to the ink jet recording medium, the treatment liquid may be incorporated in advance into the transparent porous layer as described above. Alternatively, at the time of forming an image by the application of ink, the treatment liquid may be supplied to the transparent porous layer before the application of ink.

### (Ink)

As the ink used for forming an image on the ink jet recording medium of the present embodiment, not only monochromic ink but also ink having a plurality of colors can be used according to the purpose.

As the ink used for forming a color image, it is possible to use magenta ink, cyan ink, and yellow ink, and black ink may be additionally used.

Furthermore, in addition to the ink of basic colors described above, red ink, green ink, blue ink, white ink, and special color ink (for example, colorless ink) in the field of printing, can be used.

Examples of the ink include ink which contains latex particles, an organic pigment, a dispersant, and a water-soluble organic solvent and additionally contains other additives as necessary. However, the present invention is not limited thereto, and for example, known ink jet ink can be appropriately selected and used in consideration of the purpose of use of the packaging material, the decorative effect, and the like.

### [Packaging material]

The packaging material of the present embodiment has the aforementioned ink jet recording medium of the present embodiment described above.

Generally, a packaging material is obtained by bonding two sheets such that the packaging material holds contents in the interior thereof. Both of the two sheets may be the ink jet recording medium of the present embodiment. Alternatively, one of the sheets may be the ink jet recording medium of the present embodiment, and the other may be a sheet (hereinafter, referred to as the other sheet in some cases) different from the ink jet recording medium of the present embodiment.

In a case where the two sheets are the ink jet recording medium of the present embodiment, it is preferable to bring the sides, on which the transparent porous layer is not formed, of the transparent supports into contact with each other and heat-seal these sides.

The ink jet recording medium of the present embodiment is thin and has an excellent tear strength. Therefore, the ink jet recording medium is suitable as a packaging material, particularly, a packaging material for pharmaceutical products. Particularly, the ink jet recording medium is suitably used as a packaging material for pharmaceutical products subjected to single-dose packaging.

The formation of an ink image may be performed before or after contents are put into the packaging material. The ink jet recording method is a non-contact recording method which makes it possible to perform printing as desired even in a case where the surface of the packaging material is not smooth after contents are put into the packaging material.

Furthermore, in a case where the ink jet recording medium of the present embodiment is used in a packaging material for pharmaceutical products subjected to single-dose packaging, printing may also be performed before or after the single-dose packaging (preparation of a package). In reality, ink ribbons are frequently used for printing, and what is printed remains on the ink ribbons after use. Accordingly, a lot of issues arise regarding the personal information protection and need to be handled. In a case where the ink jet recording medium of the present embodiment is used in a packaging material, the ink jet recording method reducing the risk of personal information leakage can be used. Therefore, the packaging material of the present embodiment has an advantage from the viewpoint of the information protection in special fields such as pharmaceutical products, in addition to the protection of contents and the ease of printing.

In a case where one of the two sheets is not the ink jet recording medium of the present embodiment, as long as the other sheet can be heat-sealed with the ink jet recording medium, the other sheet is not particularly limited and may or may not have heat-sealing properties. From the viewpoint of the productivity of the packaging material, it is preferable that the other sheet is a sheet having heat-sealing properties.

Examples of the other sheet include a transparent resin film, a colored resin film, a non-transparent resin film such as a white film containing a pigment and the like, paper laminated with a resin, a metal foil, and the like.

In a case where a transparent resin film is used for creating a packaging material, it is easy to see the contents from both sides, and the packaging material does not have a non-transparent portion, that is, a colored portion. Therefore, regarding the color of ink used for forming an image on the ink jet recording medium, it is not necessary to consider the color of a colored portion from the viewpoint of visibility, and more colors can be used.

In a case where a white film·paper laminated with a resin and the like are used, it is easy to see the letters·images and the like recorded by an ink jet, and inks of many colors can be used for ink jet recording.

In contrast, provided that a resin film colored black or the like is used, only in a case where the packaging material is seen from the ink jet recording medium side, it is easy to visually check whether or not light-colored contents are in the packaging material.

The contents are not particularly limited. Examples of articles that can be held in the interior of the packaging material include foods such as groceries, flavors, confectionary, and dry foods, pharmaceutical products such as tablets, capsules, and powder, and the like.

The ink jet recording medium of the present embodiment has an appropriate tear strength and excellent transparency and is excellent in the visibility of contents. Therefore, the packaging material in which the ink jet recording medium of the present embodiment is used can be suitably used for various uses as a packaging material for various articles.

### EXAMPLES

Hereinafter, the ink jet recording medium of the present embodiment will be described using examples. However, the examples are merely an example of the present embodiment, and the present invention is not limited thereto.

In the examples, unless otherwise specified, "part" and "%" are based on mass.

### (Example 1)

### <Preparation of composition for forming transparent porous layer>

According to the following makeup, a composition for forming a transparent porous layer used in Example 1 was prepared.

Two kinds of (1) silica particles, (2) deionized water, (3) "SHAROL DC-902P", and (4) "ZA-30" shown in the following makeup were mixed together, and dispersed using a bead mill (KD-P (manufactured by Shinmaru Enterprises Corporation.)). Then, the dispersion liquid was heated to 45°C and kept at 45°C for 20 hours. Thereafter, (5) boric acid, (6) polyvinyl alcohol solution, (7) surfactant, (8) ethanol, and (9) BUTYSENOL 20 shown below were added to and mixed with the obtained dispersion liquid at 30°C, thereby preparing a composition for forming a transparent porous layer.

### <Makeup of composition for forming transparent porous layer>

### -Formulation A-

(1) Silica particles manufactured by vapor-phase method
   (1-1) AEROSIL 300SF75 manufactured by NIPPON AEROSIL CO., LTD., average primary particle diameter: 7 nm (inorganic particles) 9.87 parts
   (1-2) REOLOSIL QS-30 (Tokuyama Corporation) 9.87 parts
(2) Deionized water 107.6 parts
(3) "SHAROL DC-902P (manufactured by DKS Co., Ltd.)" (51.5% aqueous solution) (dispersant, cationic polymer) 1.65 parts
(4) "ZA-30 (manufactured by DAIICHI KIGENSO KAGAKU KOGYO CO., LTD.)", (water-soluble polyvalent metal salt) 1.07 parts
(5) Boric acid (crosslinking agent) 0.73 parts
(6) Polyvinyl alcohol (water-soluble binder) solution (A) 56.5 parts
(7) Surfactant "EMULGEN 109P (manufactured by Kao Corporation)" 0.1 parts
(8) Ethanol 10.0 parts
(9) BUTYSENOL 20 (KH Neochem Co., Ltd.) 1.2 parts

### <Makeup of polyvinyl alcohol solution (A)>

The makeup of (6) polyvinyl alcohol solution (water-soluble binder) solution (A) was as below.
(a) JP-45 (JAPAN VAM & POVAL CO., LTD., saponification degree: 88%) 5.0 parts
(b) Deionized water 95.0 parts

### <Manufacturing of ink jet recording medium>

A diluted solution (16.8 g), which was obtained by diluting ALUFINE 83 (manufactured by TAIMEI CHEMICALS CO., LTD.) with deionized water by a factor of 5, was added to 200 g of the composition for forming a transparent porous layer obtained as above, thereby preparing a coating solution for forming a transparent porous layer.

One surface of a transparent support (a resin film or a laminate described in which the resin described in Table 1 was used and which had the thickness described in Table 1) was coated with the coating solution for forming a transparent porous layer in a coating amount of 21 mL/m² (coating step).

After coating, the coating solution was dried for 5 minutes in a hot-air drying machine under the condition of a temperature of 60°C and a wind speed of 3 m/sec to 8 m/sec (drying step), thereby preparing an ink jet recording medium having a transparent porous layer on the transparent support.

In a case where the transparent support was a laminate, the transparent porous layer was formed on a surface opposite to the polyethylene side.

### (Example 1 to Example 7, Example 9, Examples 11 to 13, and Comparative Example 1 to Comparative Example 3)

Example 1 to Example 7, Example 9, Examples 11 to 13, and Comparative Example 1 to Comparative Example 3 are modification examples in which the type of the transparent support or the coating amount of the transparent porous layer was changed as described in Table 1.

### (Example 8)

An ink jet recording medium was prepared in the same manner as in Example 1, except that Formulation A was changed to Formulation B shown below.

### -Formulation B-

In Formulation B, the makeup of (6) polyvinyl alcohol solution (A) in Formulation A was changed to the following polyvinyl alcohol solution (B).

### <Makeup of polyvinyl alcohol solution (B)>

(a) JP-45 (JAPAN VAM & POVAL CO., LTD., saponification degree: 94%) 5.0 parts
(b) Deionized water 95.0 parts

Furthermore, 10.0 parts of (8) ethanol as a solvent was changed to 4.0 parts of ethanol, and 0.73 parts of (5) boric acid (crosslinking agent) was changed to 1.10 parts of boric acid (crosslinking agent).

### (Example 10)

An ink jet recording medium was prepared in the same manner as in Example 1, except that Formulation A was changed to Formulation C shown below.

### -Formulation C-

In Formulation C, instead of 9.87 parts of (1) silica particles manufactured by vapor-phase method (AEROSIL 300SF75 manufactured by NIPPON AEROSIL CO., LTD., average primary particle diameter: 7 nm) (inorganic particles) and 9.87 parts of REOLOSIL QS-30 (Tokuyama Corporation) in Formulation A, 20.81 parts of MIZUKASIL P705 (MIZUSAWA INDUSTRIAL CHEMICALS, LTD.) was used, and 1.07 parts of (4) "ZA-30 (manufactured DAIICHI KIGENSO KAGAKU KOGYO CO., LTD." (water-soluble polyvalent metal salt) was not added.

By using an electron microscope, the average secondary particle diameter of particles contained in the obtained composition for forming a transparent porous layer was measured by the method described above. As a result, the average secondary particle diameter was 2.2 µm.

### <Evaluation of ink jet recording medium>

For the obtained ink jet recording medium, "tearing properties", "jetting test", "brittleness test", "letter visibility" were evaluated by the following method based on the following evaluation standards. The results are shown in Table 1.

### 1. Tearing properties

The tear strength was tested by the method described in JIS K 7128-1 (2013). The results are shown in Table 1.

On one end of each of the obtained ink jet recording media (10 cm (length) × 10 cm (width)) in the length direction, at the center in the width direction, a 5 mm cut was made along the width direction. Both ends of each of the ink jet recording media were torn off in the width direction by hand, and the tear strength was evaluated based on the following standards. The width direction (CD) refers to a direction orthogonal to a machine direction (MD) at the time of forming the film of the transparent support.

### [Evaluation standards]

A: The ink jet recording medium was simply torn at once without effort.
B: The ink jet recording medium was torn at once by the application of weak force.
C: The ink jet recording medium was torn after two to three attempts by the application of force.
D: The ink jet recording medium was not torn even after four or more attempts.

### 2. Evaluation of heat-sealing properties

The sides, which did not have the transparent porous layer, of two sheets of ink jet recording media were stacked, the media were heated using a heat-sealer HS-400 manufactured by TAIYO ELECTRIC IND. CO., LTD., and the ends of the two sheets were pulled by hand. Based on whether or not peeling occurred, the adhesion was checked.

### [Evaluation standards]

A: The media adhered to each other by being heated for 5 seconds at 120°C.
B: The media adhered to each other by being heated for 5 seconds at 160°C.
C: The media adhered to each other by being heated for 5 seconds at 200°C.
D: The media did not adhere to each other even being heated for 5 seconds at 200°C.

### 3. Total light transmittance

The total light transmittance of the ink jet recording medium was measured using a haze meter NDH-5000 (manufactured by NIPPON DENSHOKU INDUSTRIES Co., LTD.).

### 4. Haze

The haze of the ink jet recording medium was measured using a haze meter NDH-5000 (manufactured by NIPPON DENSHOKU INDUSTRIES Co., LTD.).

### 5. Powder falling

On black paper, the ink jet recording medium was torn by 20 cm, and whether or not powder falling occurred was checked. Powder falling refers to a phenomenon in which the components constituting the ink jet recording medium fall in the form of powder, and affects the external appearance of the product during manufacturing and after manufacturing of the ink jet recording medium.

### [Evaluation standards]

A: Powder falling never occurred, and the torn surface remains clean.
B: Powder falling never occurred. In a case where the torn surface was rubbed, the torn surface was slightly rough to the touch but did not cause powder falling.
C: Powder falling did not occur. However, in a case where the torn surface was rubbed, powder fell.
D: Powder falling occurred.

### 6. Evaluation of visibility

On a printed material on which the letters "FUJIFILM" were printed with the Ming-style typeface in a size of 6-point, the ink jet recording medium was placed to directly contact the printed material (contact) or placed by being spaced 3 cm apart from the printed material (non-contact), and the visibility of the letters was checked for each case based on the following standards.

### [Evaluation standards]

A: The letters were clearly seen.
B: Although the letters were blurry, they were readable.
C: Although the letters were unreadable, the presence of the letters was recognized.
D: It was impossible to see the letters.

### 7. Handleability

Regarding the handleability at the time of forming a packaging material by stacking two sheets of ink jet recording media, sensory evaluation was performed, and the handleability was evaluated based on the following standards.
A: Two sheets of ink jet recording media could be stacked without any problem.
B: Because curling occurred, two sheets of ink jet recording media need to be handled elaborately at the time of stacking them.

### 8. Printing suitability

By using an ink jet printer (PX045A: manufactured by Seiko Epson Corporation) and setting conditions of paper: plain paper, quality: clear, color: customized, and natural shade, printing was performed using seven colors of red (R), green (G), blue (B), yellow (Y), magenta (M), cyan (C), and black.

Ten minutes after the printing, the printing portion (image area) was rubbed with a finger, and whether or not uncured ink remained on the surface of the transparent porous layer was checked.
A: There was no uncured ink, and a clear image was formed.
B: Uncured ink remained, and bleeding of the image was observed.

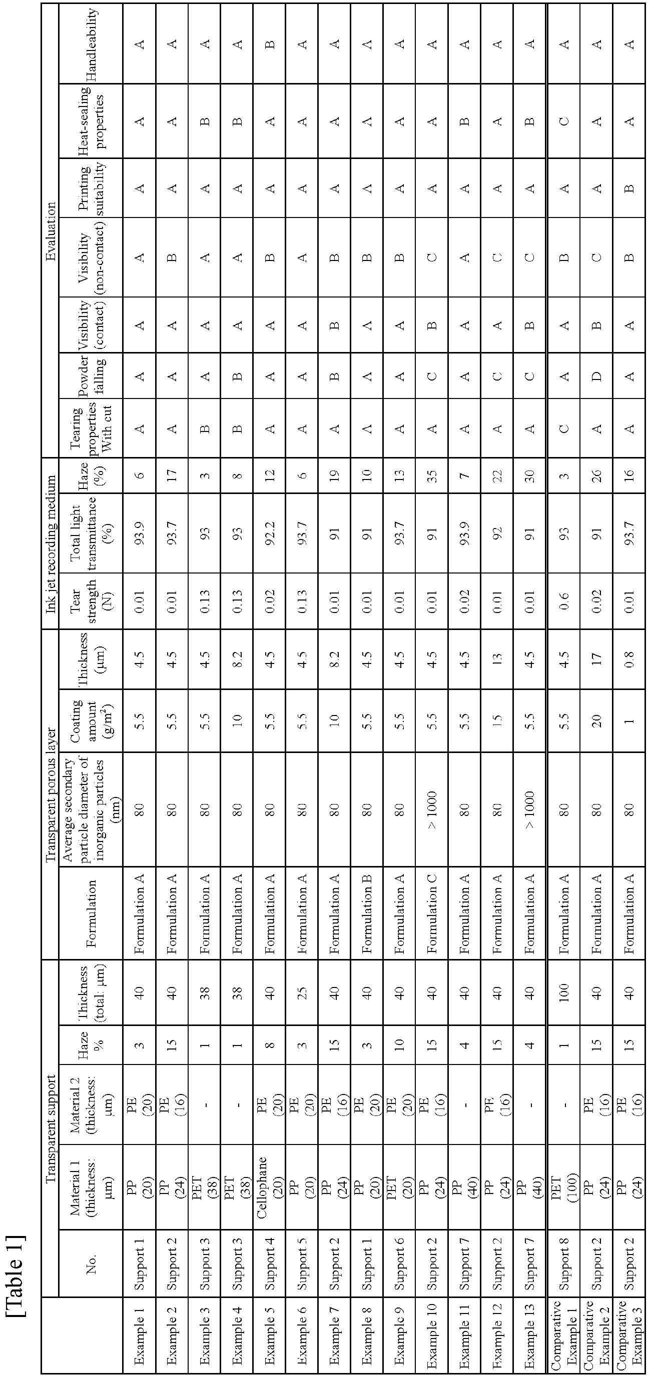

From Table 1, it is understood that the ink jet recording media of the examples are excellent in printing suitability, transparency, and visibility of contents, had a low tear strength, and are easily opened. Furthermore, it is understood that the ink jet recording media have excellent heat-sealing properties. From the evaluation results described above, it is understood that the ink jet recording media of the examples are suitable as a packaging material.

### (Example 14)

On the ink jet recording medium prepared in Example 2, printing was performed in the same manner as in Example 1. Then, by using the heat-sealer described above, the ink jet recording medium was heat-sealed for 5 seconds at 120°C except for a tablet insertion side such that a 5 cm × 5cm was prepared. From the insertion side, unpackaged five CINAL (registered trademark) tablets (Shionogi & Co., Ltd.) were sealed into the bag, and the bag was sealed by the heat-sealer, thereby preparing a packaging material containing the CINAL tablets.

As a result of observing the packaging material into which the tablets had been sealed, the marks engraved in the tablets as contents could be visually read.

### (Example 15)

In Example 14, as contents, in addition to five CINAL tablets (Shionogi & Co., Ltd.), three S-TAC (registered trademark) rhinitis capsules 12 (SSP Co., Ltd.) were sealed into the bag, and the bag was sealed by the heat-sealer, thereby preparing a packaging material containing CINAL tablets and S-TAC rhinitis capsules 12.

As a result of observing the packaging material into which the tablets and the capsules were sealed, the marks engraved in the CINAL tablets and the S-TAC rhinitis capsules 12 as contents could be visually read.

### (Example 16)

On the ink jet recording medium prepared in Example 2, printing was performed in the same manner as in Example 1. Then, by using the heat-sealer described above, the ink jet recording medium was heat-sealed for 5 seconds at 120°C except for a tablet insertion side such that a 5 cm × 5cm bag was prepared. From the insertion side, unpackaged five CINAL tablets (Shionogi & Co., Ltd.) were sealed into the bag, and the bag was sealed by the heat-sealer, thereby preparing a packaging material containing the CINAL tablets.

By using an ink jet printer, printing was performed on one surface of the packaging material into which the tablets had been sealed. As a result, it was confirmed that printing could be performed without a problem of letter quality. Therefore, it was understood that even the packaging material into which the tablets had been sealed as contents exhibited excellent printing suitability.

### (Example 17)

In Example 16, as contents, in addition to five CINAL tablets (Shionogi & Co., Ltd.), three S-TAC rhinitis capsules 12 (SSP Co., Ltd.) were sealed into the bag, and the bag was sealed by the heat-sealer, thereby preparing a packaging material containing CINAL tablets and S-TAC rhinitis capsules 12.

By using an ink jet printer, printing was performed on one surface of the packaging material into which the tablets and the capsules had been sealed. As a result, it was confirmed that printing could be performed without a problem of letter quality. Therefore, it was understood that even the packaging material into which the tablets and the capsules had been sealed as contents exhibited excellent printing suitability.

### (Example 18)

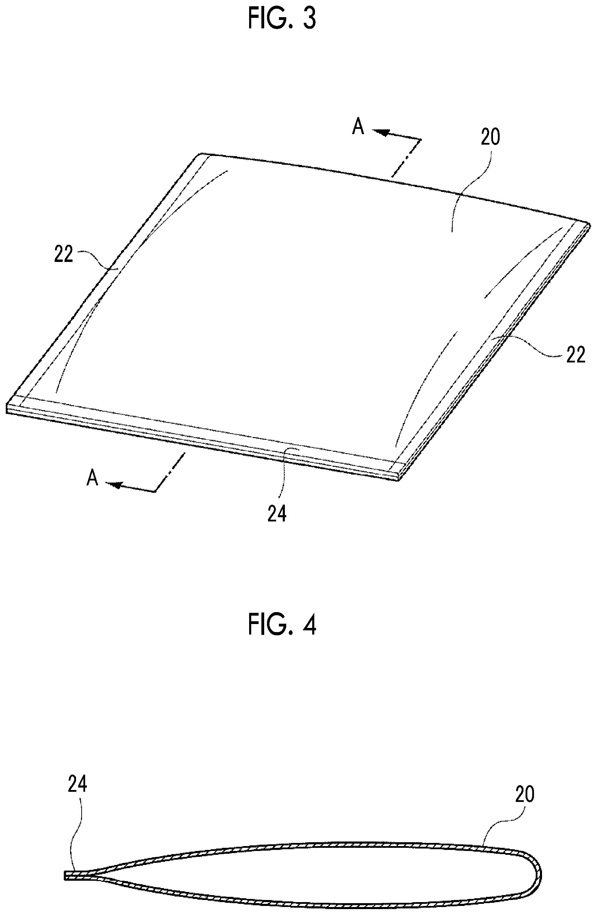

Example 18 will be described with reference to Fig. 2 and Fig. 3. An ink jet recording medium 20 prepared in Example 2 was folded once. By using the heat-sealer described above, two sides of the medium in a direction perpendicular to the folded portion were heat-sealed for 5 seconds at 120°C except for a tablet insertion side such that a 5 cm × 5 cm bag was prepared, thereby forming seal portions 22. Then, printing was performed in the same manner as in Example 1 (printed letters are not shown in the drawing). After printing, as contents, in addition to five CINAL tablets (Shionogi & Co., Ltd.), three S-TAC (registered trademark) rhinitis capsules 12 (SSP Co., Ltd.) were sealed into the bag from the insertion side, and the bag was sealed by the heat-sealer, thereby forming a seal portion 24. In this way, a packaging material containing CINAL tablets and S-TAC rhinitis capsules 12 was prepared. A cross-sectional view taken along the line A-A in Fig. 3 is shown in Fig. 4. In Fig. 2 to Fig. 4, the contents are not illustrated.

As a result of observing the packaging material into which the tablets and the capsules were sealed, the marks engraved in the CINAL tablets and the S-TAC rhinitis capsules 12 as contents could be visually read.

### (Example 19)

By using an ink jet printer, printing was performed on one surface of the packaging material prepared in Example 18 into which the tablets had been sealed. As a result, it was confirmed that printing could be performed without a problem of letter quality. Therefore, it was understood that even the packaging material into which the tablets had been sealed as contents exhibited excellent printing suitability.

### (Example 20)

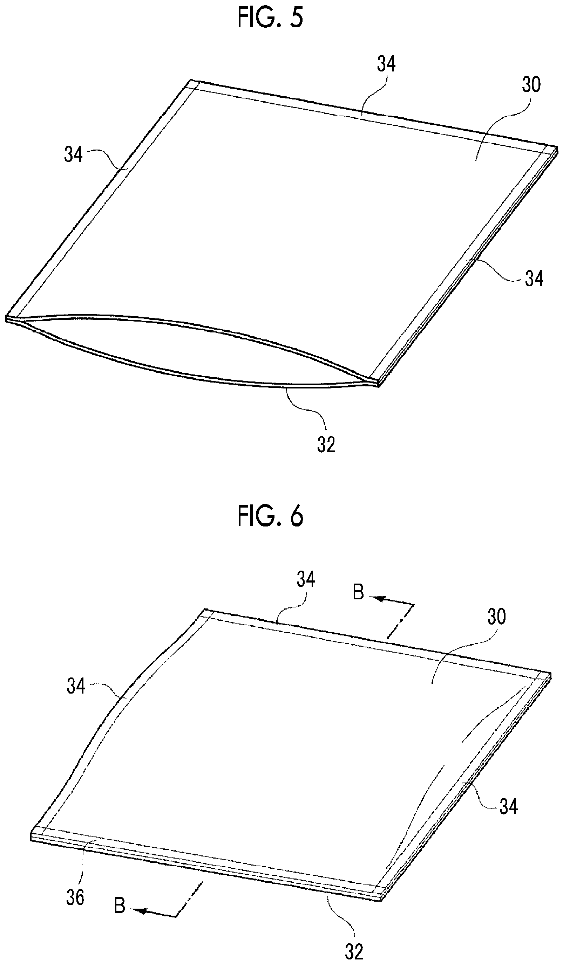

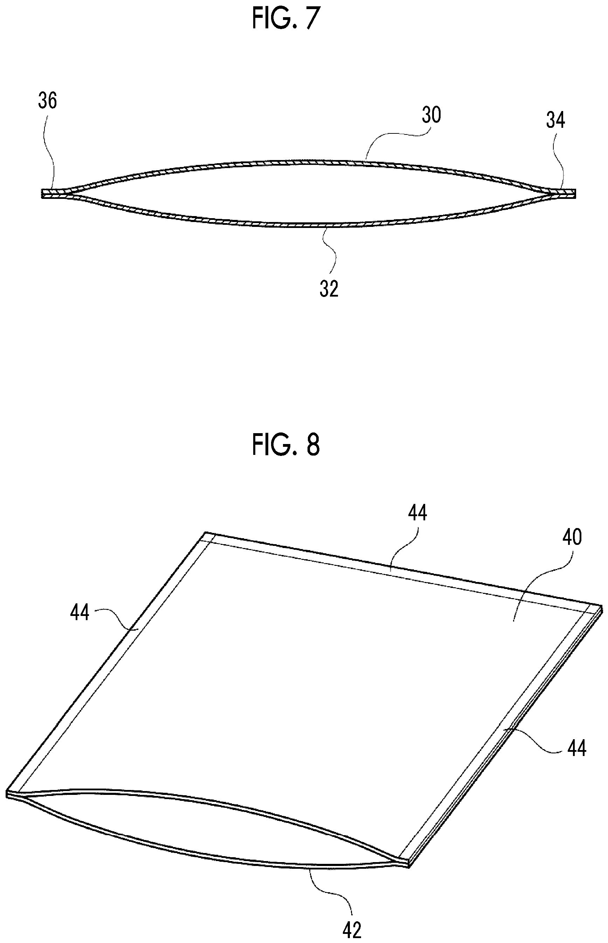

Examples 20 and 21 will be described with reference to Fig. 5 and Fig. 6. One sheet of ink jet recording medium 30 prepared in Example 2 and one sheet of transparent support (FOR25, manufactured by FUTAMURA CHEMICAL CO., LTD.) 32 were stacked. By using the heat-sealer described above, three sides thereof except for a tablet insertion side were heat-sealed for 5 seconds at 120°C such that a 5 cm × 5cm bag was prepared, thereby forming seal portions 34. Then, printing was performed on the ink jet recording medium 30 side in the same manner as in Example 1 (printed letters are not shown in the drawing). Thereafter, as contents, in addition to five CINAL tablets (Shionogi & Co., Ltd.), three S-TAC (registered trademark) rhinitis capsules 12 (SSP Co., Ltd.) were sealed into the bag from the insertion side, and the bag was sealed by the heat-sealer, thereby forming a seal portion 36. In this way, a packaging material containing CINAL tablets and S-TAC rhinitis capsules 12 was prepared. A cross-sectional view taken along the line B-B in Fig. 6 is shown in Fig. 7. In Fig. 5 to Fig. 7, the contents are not illustrated.

As a result of observing the packaging material, into which the tablets and the capsules had been sealed, from the ink jet recording medium 30 side, the marks engraved in the CINAL tablets as contents and the marks engraved in the S-TAC rhinitis capsules 12 as contents could be visually read. In a case where the packaging material was observed from the transparent support 32 side, the marks engraved in the CINAL tablets as contents and the marks engraved in the S-TAC rhinitis capsules 12 as contents could be visually read as well. Furthermore, the printing suitability was also excellent.

### (Example 21)

By using an ink jet printer, printing was performed on the ink jet recording medium 30 side prepared in Example 20 into which tablets had been sealed. As a result, it was confirmed that printing could be performed without a problem of letter quality. Therefore, it was understood that even the packaging material, into which the tablets as contents had been sealed, exhibited excellent printing suitability.

### (Example 22)

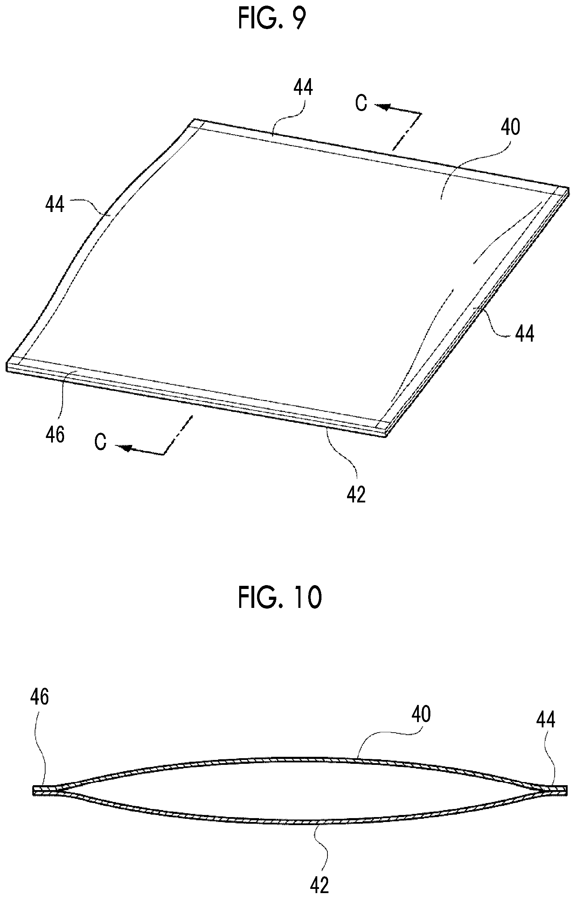

Examples 22 and 23 will be described with reference to Fig. 8 and Fig. 9. One sheet of ink jet recording medium 40 prepared in Example 2 and one sheet of white support (ECONAGE NWH-1, #30, manufactured by Mitsui Chemicals Tohcello. Inc.) 42 were stacked. By using the heat-sealer described above, three sides thereof except for a tablet insertion side were heat-sealed for 5 seconds at 120°C such that a 5 cm × 5cm bag was prepared, thereby forming seal portions 44. Then, printing was performed on the ink jet recording medium 40 side in the same manner as in Example 1 (printed letters are not shown in the drawing). Thereafter, as contents, in addition to five CINAL tablets (Shionogi & Co., Ltd.), three S-TAC (registered trademark) rhinitis capsules 12 (SSP Co., Ltd.) were sealed into the bag from the insertion side, and the bag was sealed by the heat-sealer, thereby forming a seal portion 46. In this way, a packaging material containing CINAL tablets and S-TAC rhinitis capsules 12 was prepared. A cross-sectional view taken along the line C-C in Fig. 9 is shown in Fig. 10. In Fig. 8 to Fig. 10, the contents are not illustrated.

As a result of observing the packaging material, into which the tablets and the capsules had been sealed, from the ink jet recording medium 40 side, the marks engraved in the CINAL tablets as contents and the marks engraved in the S-TAC rhinitis capsules 12 as contents could be visually read. Furthermore, the printing suitability and the visibility of the letters were excellent.

### (Example 23)

By using an ink jet printer, printing was performed on the ink jet recording medium 40 side prepared in Example 22 into which the tablets had been sealed. As a result, it was understood that the printing suitability and the visibility of the letters were excellent.

### (Example 24)

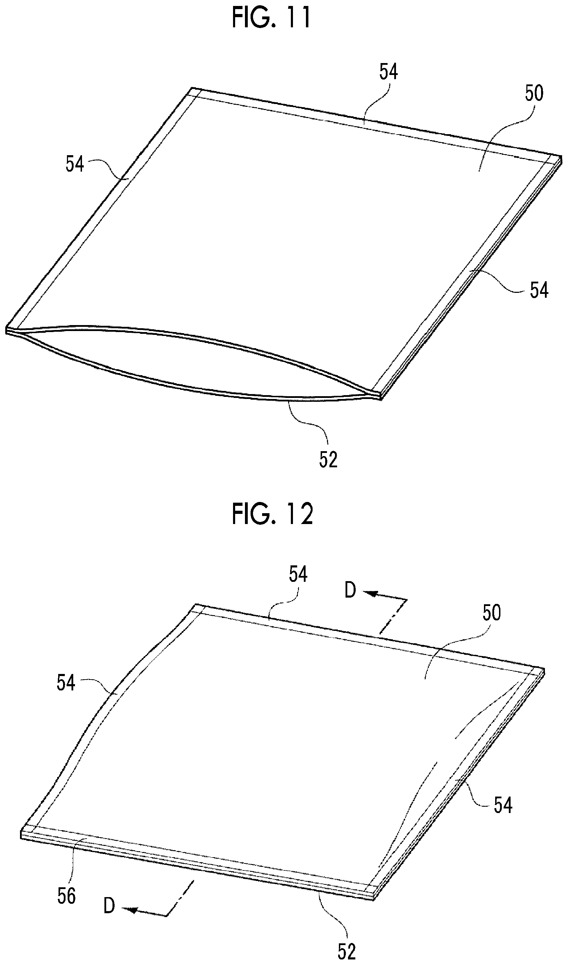

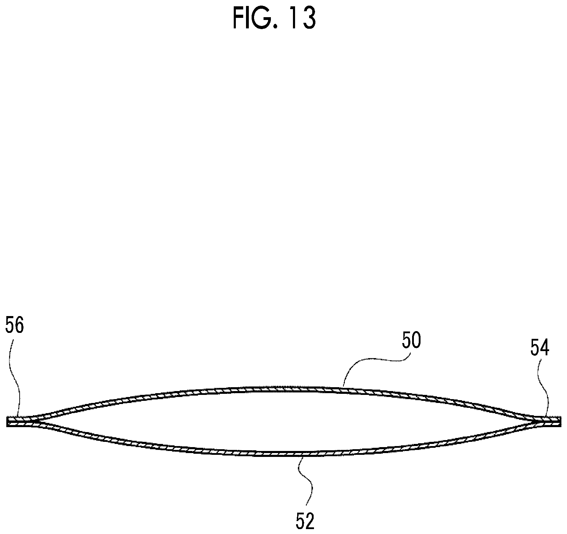

Examples 24 and 25 will be described with reference to Fig. 11 and Fig. 12. One sheet of ink jet recording medium 50 prepared in Example 2 and one sheet of black support (Shako-BPF, 30 µm, manufactured by Takeda sangyo Corporation.) 52 were stacked. By using the heat-sealer described above, three sides thereof except for a tablet insertion side were heat-sealed for 5 seconds at 120°C such that a 5 cm × 5cm bag was prepared, thereby forming seal portions 54. Then, by using white ink, printing was performed on the ink jet recording medium 50 side in the same manner as in Example 1 (printed letters are not shown in the drawing). Thereafter, as contents, in addition to five CINAL tablets (Shionogi & Co., Ltd.), three S-TAC (registered trademark) rhinitis capsules 12 (SSP Co., Ltd.) were sealed into the bag from the insertion side, and the bag was sealed by the heat-sealer, thereby forming a seal portion 56. In this way, a packaging material containing CINAL tablets and S-TAC rhinitis capsules 12 was prepared. A cross-sectional view taken along the line D-D in Fig. 12 is shown in Fig. 13. In Fig. 11 to Fig. 13, the contents are not illustrated.

As a result of observing the packaging material, into which the tablets and the capsules had been sealed, from the ink jet recording medium 50 side, the marks engraved in the CINAL tablets as contents and the marks engraved in the S-TAC rhinitis capsules 12 as contents could be visually read, and the tablets were clearly seen as well. Furthermore, the printing suitability and the visibility of the letters were excellent.

### (Example 25)

By using an ink jet printer and white ink, printing was performed on the ink jet recording medium 50 side prepared in Example 24 into which the tablets had been sealed. As a result, it was understood that the printing suitability and the visibility of the letters were excellent.

The entirety of the disclosure in JP2016-150672 field on July 29, 2016 is incorporated into the present specification by reference.

All the documents, patent applications, and technical standards described in the present specification are incorporated into the present specification by reference as if each of the documents, the patent applications, and the technical standards is specifically and independently described and incorporated into the present specification by reference.

## Claims

1. An ink jet recording medium comprising:
a transparent support having a thickness of 10 µm to 60 µm; and
a transparent porous layer which is provided on at least one surface of the transparent support, contains inorganic particles, and has a thickness of 1 µm to 15 µm,
wherein a tear strength measured based on JIS K 7128-1 (2013) is equal to or lower than 0.5 N.

2. The ink jet recording medium according to claim 1,
wherein a haze is less than 20%.

3. The ink jet recording medium according to claim 1 or 2,
wherein the transparent support has a polyethylene-containing layer.

4. The ink jet recording medium according to any one of claims 1 to 3,
wherein the transparent support is a laminate having two or more layers, and
the laminate is a laminate selected from the group consisting of a laminate having a polyester-containing layer and a polyethylene-containing layer and a laminate having a polypropylene-containing layer and a polyethylene-containing layer.

5. The ink jet recording medium according to any one of claims 1 to 4,
wherein the inorganic particles are one or more inorganic particles selected from the group consisting of silica particles, alumina particles, and pseudo-boehmite.

6. The ink jet recording medium according to any one of claims 1 to 5,
wherein the inorganic particles contain silica particles having an average secondary particle diameter equal to or smaller than 100 nm.

7. The ink jet recording medium according to any one of claims 1 to 6,
wherein a content of the inorganic particles contained in the transparent porous layer with respect to a total solid content in the transparent porous layer is 50% by mass to 90% by mass.

8. The ink jet recording medium according to any one of claims 1 to 7,
wherein the transparent porous layer contains a water-soluble polymer.

9. The ink jet recording medium according to any one of claims 1 to 8,
wherein a thickness of the transparent porous layer is 2 µm to 10 µm.

10. The ink jet recording medium according to any one of claims 1 to 9,
wherein the tear strength measured based on JIS K 7128-1 (2013) is equal to or higher than 0.01 N and equal to or lower than 0.2 N.

11. A packaging material comprising:
the ink jet recording medium according to any one of claims 1 to 10.
